# EUROPÄISCHE PATENTSCHRIFT

(11) **EP 0 454 698 B1**
(45) Veröffentlichungstag und Bekanntmachung des Hinweises auf die Patenterteilung: **31.03.1993**
(21) Anmeldenummer: 90901561.2
(22) Anmeldetag: 09.01.1990
(51) Int. Cl.: F16K 41/00

(54) **SPINDELABDICHTUNG FÜR EINE ABSPERRARMATUR**
SPINDLE SEALING FOR A SHUT-OFF FITTING
JOINT D'ETANCHEITE POUR TIGE DE ROBINET D'OBTURATION

(30) Priorität: 21.01.1989 DE 3901699
(43) Veröffentlichungstag der Anmeldung: 06.11.1991
(73) Patentinhaber: KSB Aktiengesellschaft, 67227 Frankenthal (DE)
(72) Erfinder: BARTOSCHEK, Manfred, D-6710 Frankenthal (DE); LOVISETTO, Primo, I-36100 Vicenza (IT)
(86) Internationale Anmeldenummer: EP9000041
(87) Internationale Veröffentlichungsnummer: WO9008285

(56) Entgegenhaltungen:
- US-A- 2 622 838
- US-A- 3 051 434
- US-A- 3 687 017

## Beschreibung

Die Erfindung betrifft eine Spindelabdichtung gemäß dem Oberbegriff des Anspruches 1.

Bei den bekannten Guß- und Stahlarmaturen sind Dichtungsräume für die Spindelabdichtung vorzugsweise in dickwandige Gehäuse oder Gehäusedeckel eingearbeitet. Weiterhin ist es bekannt, eine der Spindelabdichtung dienende Stopfbuchs- oder Dachmanschettendichtung in einem vom Gehäuse oder vom Deckel der Armatur unabhängigen Dichtungsträger anzuordnen.

So ist aus der DE-A-2 252 532 eine Traghülse für eine Dachmanschettendichtung bekannt, die auf einer im Armaturengehäuse ausgebildeten Schulter aufliegt. Die Hülse, die den zwischen Gehäuseinnenwand und Dichtung vorhandenen Raum ausfüllt, ist ein naturgemäß dickwandiges Teil. Ihre mit der Gehäusewand in Kontakt stehende Außenfläche dient der Zentrierung.

Durch die US-A-2 622 838 ist eine Hülse bekannt, welche die Ringe einer die Armaturenspindel umschließenden Stopfbuchspackung aufnimmt. Hier ist die Hülse allerdings im Deckel des Armaturengehäuses angeordnet. Es handelt sich bei ihr aber ebenfalls um ein Teil, das den Raum zwischen der ihn tragenden Innenwand und der Dichtung vollständig ausfüllt.

Dickwandige, mit ihrer Außenkontur an eine sie aufnehmende Innenwand angepaßte Dichtungsträger sind nur dort akzeptabel, wo kein größerer Abstand zwischen der Innenwand und der Spindeldichtung zu überwinden ist. Im übrigen lassen sich die für die dickwandigen Armaturen und Dichtungsträger gefundenen Lösungen.nicht ohne weiteres auf Blecharmaturen übertragen, da deren wesentlich dünneren Wände keine eingearbeiteten Kammern aufnehmen können.

Der Erfindung liegt die Aufgabe zugrunde, eine Spindelabdichtung für Absperrarmaturen zu schaffen, deren Dichtungsträger auch für Blechgehäuse geeignet ist. Die gestellte Aufgabe wird erfindungsgemäß durch die im Anspruch 1 genannten Merkmale gelöst. Die Unteransprüche nennen vorteilhafte Ausgestaltungen der erfindungsgemäßen Spindelabdichtung.

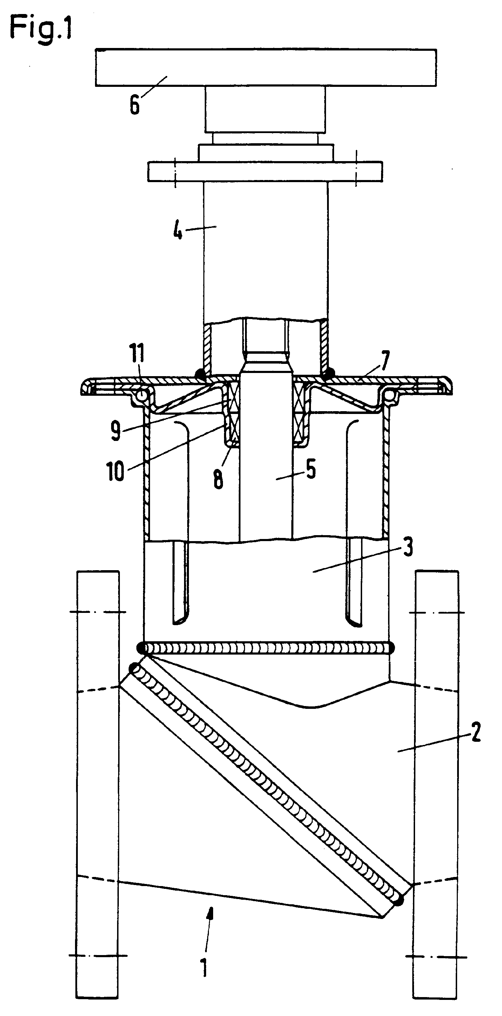

Anhand eines Ausführungsbeispiels wird die Erfindung näher erläutert. Die Zeichnung zeigt in
- Fig. 1: eine Absperrarmatur mit einem Blechgehäuse und einem aus Blech geformten Dichtungsträger für die Spindelabdichtung, und in
- Fig. 2: den Dichtungsträger der Fig. 1 in vergrößerter Darstellung.

Das aus Blechteilen mittels Schweißung zusammengefügte Armaturengehäuse (1) besteht im wesentlichen aus einem Hauptteil (2), einem Gehäuseaufsatz (3) und einem darüber angeordneten Zylinderaufsatz (4), der den Betätigungsmechanismus der Absperrarmatur aufnimmt.

Zur Betätigung des an einer Spindel (5) befestigten - nicht dargestellten - Verschlußstückes dient ein Handrad (6).

Obere Trennwand zwischen dem Innenraum des Armaturengehäuses (1) und der Umgebung ist ein Gehäusedeckel (7), in dessen Bereich die Spindelabdichtung der Absperrarmatur angeordnet ist. Die der Spindelabdichtung dienenden Teile (8, 9) werden aufgenommen von einem Dichtungsträger (10), der zwischen dem Gehäuseaufsatz (3) und dem Gehäusedeckel (7) eingeklemmt ist. Der Abdichtung am Außendurchmesser des Dichtungsträgers (10) und damit des Gehäusedeckels (7) dient ein O-Ring (11), der in einer durch den Gehäuseaufsatz (3) und den Flansch (12) des Dichtungsträgers (10) gebildeten Kammer angeordnet ist.

Die Art des Dichtungaträgers und die unterachiedlichen Formen der mit ihm im Gehäuse zu verwirklichenden Kammern erlauben es, die verschiedensten Dichtungswerkstoffe in Anpassung an unterschiedliche Anforderungen bezüglich Druck, Temperatur und Medium vorzusehen. Es kommen vor allem Elastomer-, Fluorthermoplast- und Graphitdichtungen in Frage. Dabei ist es sogar möglich, alle Dichtungsarten wahlweise in der gleichen Kammer anzuordnen. Eine besondere Gestaltung oder zusätzliche Maßnahmen und Mittel sind nicht erforderlich.

Die Abdichtung könnte aber auch durch eine zwischen dem Gehäuseaufsatz (3) und dem Gehäusedeckel (7) vorgesehenen Flachdichtung erfolgen.

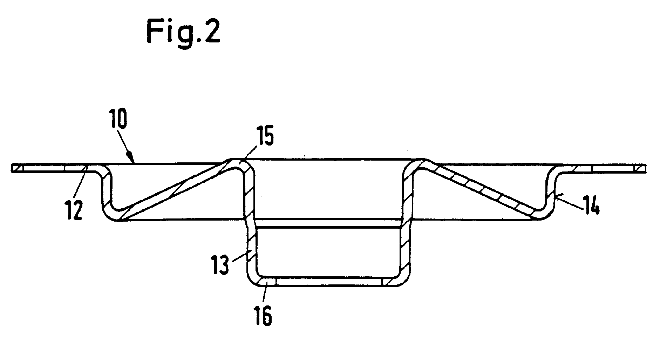

Wie aus der Fig. 2 hervorgeht, bildet der Dichtungsträger (10) in seiner Mitte eine Hülse (13) die eine Durchmesserabstufung in Einbaurichtung der Dichtung (8, 9) besitzt. Hierdurch wird ein unverwechselbarer Einbau der Dichtung (8, 9) gewährleistet.

An seinem Umfang besitzt der Dichtungsträger (10) einen zylindrischen Zentrierabschnitt (14), der mit der Innenwand des Gehäuseaufsatzes (3) zusammenwirkt. Der Zentrierung dient auch eine den oberen Rand der Hülse (13) umschließende Wölbung (15) die in eine ihr entsprechende Ausnehmung des Gehäusedeckels (7) eingreift. Die beiden Maßnahmen stellen eine bei der Montage der Absperrarmatur nutzbare Hilfe dar.

Die Stirnseite (16) des Dichtungsträgers (10) bildet einen Anschlag für ein auf der Spindel (5) befestigtes Teil (z. B. Verschlußstück); sie dient also der Hubbegrenzung der Absperrarmatur. Die Stirnseite (16) ist aber auch als Dichtungspartner einer Spindelrückdichtung nutzbar zu machen.

## Patentansprüche

1. Spindelabdichtung für eine Absperrarmatur, mit einem mit dem Armaturengehäuse (1) verbundenen Dichtungsträger (10), welcher in seiner Mitte eine eine oder mehrere Dichtungsbuchsen (8, 9) aufnehmende Hülse (13) bildet, **dadurch gekennzeichnet,** daß der aus einem tiefgezogenen Blechteil bestehende Dichtungsträger (10) mit einem im Umfangsbereich gelegenen, mit der Wand des Armaturengehäuses (1) in Flächenkontakt stehenden, durch eine Wölbung des Blechteiles gebildeten Zentrierabschnitt (14) ausgestattet ist.

2. Spindelabdichtung nach Anspruch 1, dadurch gekennzeichnet, daß der Dichtungsträger (10) mit einem nahe seinem Umfang gelegenen, mit der Innenwand des Armaturengehäuses (1) in Flächenkontakt stehenden Zentrierabschnitt (14) ausgestattet ist.

3. Spindelabdichtung nach Anspruch 1, gekennzeichnet durch eine den oberen Rand der Hülse (13) umschließende Wölbung (15), welche in eine Ausnehmung eines benachbarten Gehäuseteils (7) zentrierend eingreift.

4. Spindelabdichtung nach Anspruch 1, dadurch gekennzeichnet, daß die Stirnseite (16) der Hülse (13) den Dichtungspartner einer Spindelrückdichtung bildet.

5. Spindelabdichtung nach Anspruch 1, dadurch gekennzeichnet, daß der Dichtungsträger (10) einen Außenrand besitzt, der, zusammen mit der Wand des Armaturengehäuses (1), die Kammer für einen Dichtring (11) bildet.

## Claims

1. A stem sealing device for a shut-off element, comprising a seal carrier (10) connected with the housing (1) of the element, which carrier in its center constitutes a sleeve (13) receiving one or more stuffing boxes (8 and 9), characterized in that the seal carrier (10) consisting of a deep-drawn sheet metal component is equipped with a centering section (14) which is arranged in the circumferential part, is in surface contact with the wall of the device housing (1) and is formed by a vaulted part of the sheet metal component.

2. The stem sealing device as claimed in claim 1, characterized in that the seal carrier (10) is equipped with a centering section (14) which is placed near its periphery and makes surface contact with the inner wall face of the housing (1) of the device.

3. The stem sealing device as claimed in claim 1, characterized by a vaulted part (15) surrounding the upper edge of the sleeve (13) and which fits into a recess of an adjacent part (7) of the housing.

4. The stem sealing device as claimed in claim 1, characterized in that the end surface (16) of the sleeve (13) constitutes part of a stem back seal.

5. The stem sealing device as claimed in claim 1, characterized in that the seal carrier (10) possesses an outer edge, which, together with the wall of the housing (1) of the device, constitute the chamber for a sealing ring (11).

## Revendications

1. Joint d'étanchéité de broche pour un dispositif d'arrêt, avec, lié au boîtier de robinetterie (1), un porte-joint (10) qui forme en son milieu une gaine (13) renfermant une ou plusieurs douilles de joint (8, 9) caractérisé en ce que le porte-joint (10) composé d'un morceau de tôle emboutie est muni d'une pièce de centrage (14) située dans la zone périphérique, en contact superficiel avec la paroi du boîtier de robinetterie (1) et formée par la courbure de la pièce de tôle.

2. Joint d'étanchéité de broche selon la revendication 1 caractérisé en ce que le porte-joint (10) est muni d'une pièce de centrage (14) située près de sa périphérie et en contact superficiel avec la paroi intérieure du boîtier de robinetterie (1).

3. Joint d'étanchéité selon la revendication 1 caractérisé par une courbure (15) qui englobe le bord supérieur de la gaine (13) et qui pénètre en la centrant dans un creux d'une pièce de boîtier (7) voisine.

4. Joint d'étanchéité selon la revendication 1 caractérisé en ce la face frontale (16) de la gaine (13) forme le partenaire d'étanchéité d'un joint d'étanchéité inverse de la broche.

5. Joint d'étanchéité selon la revendication 1 caractérisé en ce que le porte-joint (10) possède un bord externe qui forme avec la paroi du boîtier de robinetterie (1) la chambre pour une bague d'étanchéité (11).
